# EUROPEAN PATENT APPLICATION

(11) **EP 4 318 156 A1**
(43) Date of publication of application: **07.02.2024**
(21) Application number: 23184023.2
(22) Date of filing: 07.07.2023
(51) Int. Cl.: G05D 1/00, B62D 6/00, A01B 69/04, G05D 1/02

(54) **WORK VEHICLE**

(30) Priority: 03.08.2022 JP 2022124189
(71) Applicant: Yanmar Holdings Co., Ltd., Osaka-shi, Osaka (JP)
(72) Inventor: HASEGAWA, Satoshi, Okayama-shi (JP); AKAYAMA, Kazuya, Okayama-shi (JP)
(74) Representative: Dennemeyer & Associates S.A.

(57) **Abstract**

[Problem] To provide a technology that can improve convenience of a work vehicle that is provided to be capable of automatic steering.

[Solution] An exemplary work vehicle includes a steering wheel, a steering shaft that supports the steering wheel, a steering motor that enables automatic steering of the steering wheel, and a switching mechanism that switches a power transmission state existing between the steering motor and the steering shaft between a connection state and a shutoff state.

## Description

### TECHNICAL FIELD

The present invention relates to a work vehicle.

### BACKGROUND ART

Conventionally, a work vehicle having an automatic steering mechanism that performs automatic steering of a steering wheel is known (see, for example, Patent Document 1). The automatic steering mechanism disclosed in Patent Document 1 includes a steering motor and a gear mechanism. The steering motor is a motor that can control a rotation direction, a rotation speed, a rotation angle, etc. based on a vehicle body's position. The gear mechanism includes a gear that is provided on a steering shaft rotatably supporting a steering wheel and rotates together with the steering shaft, and a gear that is provided on a rotation shaft of the steering motor and rotates together with the rotation shaft. When the rotation shaft of the steering motor rotates, the steering shaft automatically rotates via the gear mechanism.

### PRIOR ART DOCUMENT

### PATENT DOCUMENT

Patent Document 1: Japanese Patent No. 7030540

### SUMMARY OF INVENTION

### TECHNICAL PROBLEM

In a conventional work vehicle including an automatic steering mechanism, a steering motor and a steering shaft are always connected to each other via a gear mechanism. For this reason, in a case where manual steering is performed, such as when moving and traveling or when detaching and attaching a work machine, steering force (motor torque) increases, as the steering motor becomes resistance. In other words, there is a concern that operability may be reduced when moving and traveling or when attaching and detaching the work machine, and the like. In addition, when the motor torque increases, there is a concern that driver fatigue may accumulate in a case where moving and traveling lasts for a long time.

In view of the above, an object of the present invention is to provide a technique capable of improving convenience of a work vehicle that is provided to be capable of automatic steering.

### SOLUTION TO PROBLEM

An exemplary work vehicle of the present invention includes a steering wheel, a steering shaft that supports the steering wheel, a steering motor that enables automatic steering of the steering wheel, and a switching mechanism that switches a power transmission state existing between the steering motor and the steering shaft between a connection state and a shutoff state.

### ADVANTAGEOUS EFFECTS OF INVENTION

The exemplary present invention can improve the convenience of the work vehicle that is provided to be capable of automatic steering.

### BRIEF DESCRIPTION OF DRAWINGS

FIG. 1 is a side view illustrating a schematic configuration of a tractor.
FIG. 2 is a block diagram illustrating a configuration related to an automatic steering function of the tractor.
FIG. 3 is a view for explaining an example of a setting method of a reference line.
FIG. 4 is a side view illustrating a schematic configuration of a periphery of a steering shaft.
FIG. 5 is a perspective view illustrating a schematic configuration of a gear mechanism in a state where a gear case is removed.
FIG. 6A is a diagram schematically illustrating a switching mechanism, and illustrating a shutoff state.
FIG. 6B is a diagram schematically illustrating the switching mechanism, and illustrating a connection state.
FIG. 7 is a diagram for explaining the switching mechanism of a modified example.
FIG. 8 is a flowchart illustrating an example of a control operation related to the switching mechanism when an operation to start automatic traveling is performed.
FIG. 9 is a flowchart illustrating an example of a control operation related to the switching mechanism before starting the automatic traveling.
FIG. 10 is a flowchart illustrating an example of a control operation related to the switching mechanism during the automatic traveling.
FIG. 11 is a flowchart illustrating an example of a control operation related to the switching mechanism when automatic traveling is stopped.
FIG. 12 is a schematic diagram for explaining a speed change stage included in the tractor.
FIG. 13 is flowchart illustrating an example of a control operation related to the switching mechanism based on information of the speed change stage.
FIG. 14 is a flowchart illustrating an example of a control operation related to the switching mechanism based on position information of a vehicle itself.

### DESCRIPTION OF EMBODIMENTS

Embodiments of the present invention are to be described with reference to the drawings. In the present embodiments, an example, in which the work vehicle is a tractor, will be described. The work vehicle, however, may be a work vehicle other than the tractor, such as various harvesters, rice planters, combine harvesters, civil engineering and construction work machines, snow plow cars, etc.

In addition, in the present specification, directions are defined as follows. First, a direction in which the tractor as the work vehicle travels during work is defined as "front" and a direction opposite to the front is defined as "rear". In addition, a right side when facing a traveling direction of the tractor is defined as "right" and a left side of the same is defined as "left". A direction perpendicular to a front-rear direction and left-right direction of the tractor is defined as an up-down direction. In this case, a gravity direction is set as down, and an opposite side thereof is set as up. The directions described above are designations used merely for explanation, and are not intended to limit the actual positional relationships and directions.

### <1. Outline of Work Vehicle>

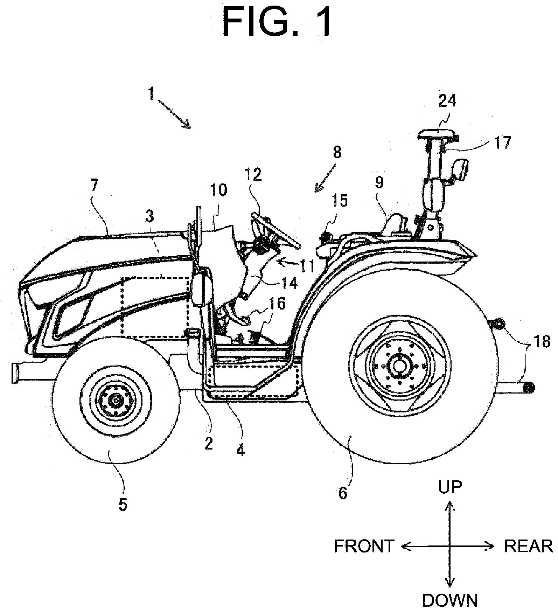

FIG. 1 is a side view of a schematic configuration of a tractor 1 according to an embodiment of the present invention. As illustrated in FIG. 1, the tractor 1 includes a vehicle body 2, an engine 3, and a transmission case 4.

A pair of left and right front wheels 5 are disposed on a front portion of the vehicle body 2. A pair of left and right rear wheels 6 are disposed on a rear portion of the vehicle body 2. The vehicle body 2 can travel by the front wheels 5 and the rear wheels 6. That is, the tractor 1 of the present embodiment is a wheel tractor. However, the tractor 1 is not limited to the wheel tractor, and may also be a crawler tractor or the like.

The engine 3 is disposed on the front portion of the vehicle body 2 so as to be covered by a hood 7. The engine 3 is a drive power source of the tractor 1. The tractor 1 may be driven by another drive source, such as an electric motor, instead of the engine.

The transmission case 4 is disposed at the rear of the engine 3 and below a drive part 8. The output of the engine 3 is changed in speed by a speed change device (not illustrated) disposed in the transmission case 4 and is transmitted to at least one of the front wheels 5 and the rear wheels 6.

The drive part 8 is provided at the rear of the engine 3 in the vehicle body 2. The drive part 8 is a portion that a driver (operator) gets on. The drive part 8 has a driver's seat 9 and a front panel 10. The driver's seat 9 is a place where the driver sits on. The front panel 10 is disposed in front of the driver's seat 9. The front panel 10 includes a steering 11. That is, the steering 11 is disposed in front of the driver's seat 9. The front panel 10 is also provided with a meter display part and the like to show a speed of the tractor 1.

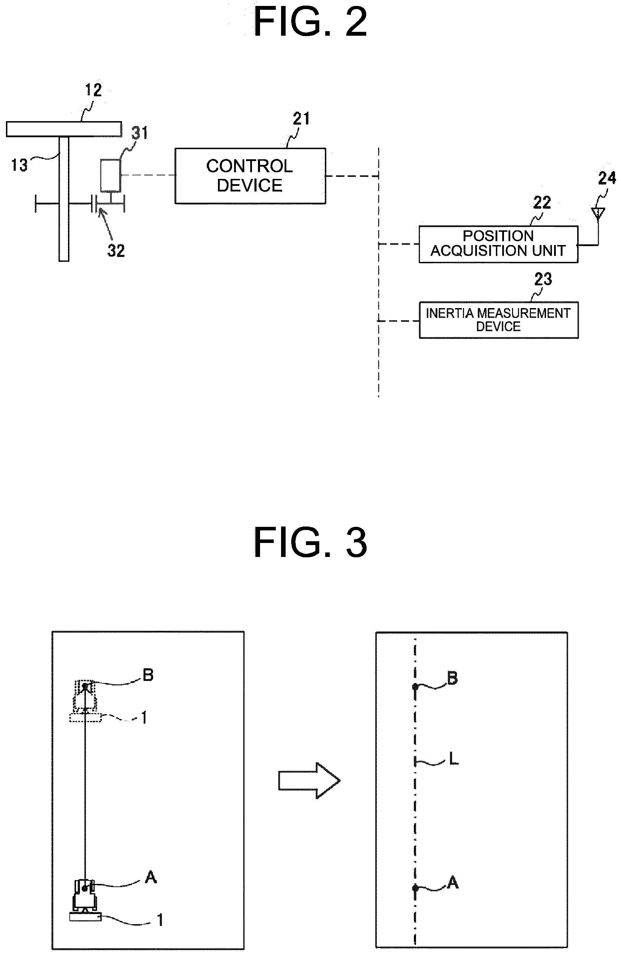

The steering 11 includes a steering wheel 12 and a steering shaft 13 (see FIG. 2 and the like described below). That is, the tractor 1 includes the steering wheel 12 and the steering shaft 13. The steering 11 further includes a power steering device (not illustrated). The power steering device assists manual steering of the steering wheel 12.

The steering wheel 12 is operated by the driver sitting on the driver's seat 9. The steering shaft 13 supports the steering wheel 12. Specifically, the steering shaft 13 supports the steering wheel 12 in a relatively non-rotatable manner. That is, the steering wheel 12 and the steering shaft 13 integrally rotate. In FIG. 1, the steering shaft 13 is covered with a steering column 14.

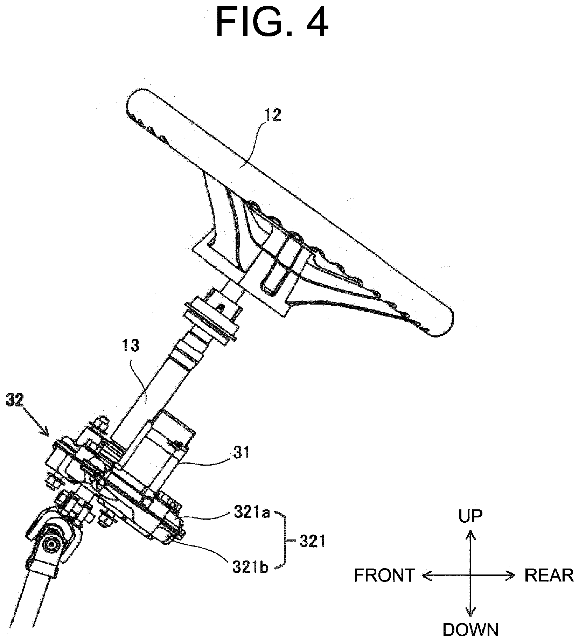

The steering wheel 12 and the steering shaft 13 are rotatably supported by a member (not illustrated) disposed in the steering column 14. The steering shaft 13 has a columnar shape and extends obliquely so as to be inclined in a direction in which the upper side is more rearward than the lower side with respect to the up-down direction (see FIG. 4 described below). The steering wheel 12 is disposed at an upper end portion of the steering shaft 13. The orientation of the front wheels 5 can be changed by rotating the steering wheel 12.

In addition, for example, various operation levers 15 and pedals 16 operated by the driver are provided in the drive part 8. The various operation levers 15 may include a main speed change lever, a sub speed change lever, and a work lever, for example. In addition, the various pedals 16 may include an accelerator pedal, a brake pedal, and a clutch pedal, for example.

In the present embodiment, a roll-over protection structure frame 17 (hereinafter, ROPS frame 17) is provided behind the driver's seat 9. The ROPS frame 17 can protect the driver when the tractor 1 falls over. The tractor 1 may have a cabin specification in which the driver's seat 9 is covered by a cabin, instead of a ROPS specification in which the ROPS frame 17 is provided.

A work machine coupling portion 18 configured by a three-point link mechanism, etc. is provided at the rear portion of the vehicle body 2. A work machine can be attached to the work machine coupling portion 18. The work machine may be, for example, a tilling device, a plow, a fertilizing device, an agricultural chemical spraying device, a harvesting device, or a reaping device. In addition, an elevating device (not illustrated) including a hydraulic device such as an elevating cylinder is provided at the rear portion of the vehicle body 2. The elevating device can elevate and lower the work machine by elevating and lowering the work machine coupling portion 18. In addition, the power generated by the engine 3 can be transmitted, via the speed change device (not illustrated) disposed in the transmission case 4 and a power take-off shaft (PTO shaft; not illustrated) disposed at the rear portion of the vehicle body 2, to the work machine connected by the work machine coupling portion 18.

In the present embodiment, the tractor 1 has an automatic steering function in which steering is performed autonomously along a predetermined route. That is, the tractor 1 is provided so as to be able to travel by either manual steering in which the driver operates the steering wheel 12 or automatic steering. FIG. 2 is a block diagram illustrating a configuration related to the automatic steering function of the tractor 1 according to the present embodiment. The tractor 1 may be configured to autonomously perform, in addition to the steering, at least one of vehicle speed control and work by the work machine.

As illustrated in FIG. 2, the tractor 1 includes a steering motor 31 that enables automatic steering of the steering wheel 12. In addition, the tractor 1 includes a gear mechanism 32 that is provided so as to be able to transmit rotational power of the steering motor 31 to the steering shaft 13.

The steering motor 31 is provided so as to be able to control a rotation direction, a rotation speed, a rotation angle, etc. When an output shaft of the steering motor 31 rotates, the rotational power is transmitted via the gear mechanism 32, so that the steering shaft 13 automatically rotates. That is, the steering wheel 12 can be automatically rotated by the drive of the steering motor 31. In this embodiment, the steering motor 31 and the gear mechanism 32 are disposed in the steering column 14.

In addition, as illustrated in FIG. 2, the tractor 1 includes a control device 21. The control device 21 is, for example, a computer device including an arithmetic device, an input/output unit, and a storage unit. The arithmetic device is, for example, a processor or a microprocessor. The storage unit is a main storage device such as a read only memory (ROM) and a random access memory (RAM). The storage unit may further include an auxiliary storage device such as a hard disk drive (HDD) or a solid state drive (SSD). Various programs, data and the like are stored in the storage unit. The arithmetic device reads out various programs from the storage unit and performs an arithmetic process which accord to the programs.

The number of the control devices 21 may be single or plural. In a case where the number of the control devices 21 is plural, the configuration may be such that the plurality of control devices can communicate with each other. The control device 21 is disposed at an appropriate position on the vehicle body 2.

In the present embodiment, the control device 21 controls automatic traveling including the automatic steering. That is, the tractor 1 is provided so as to be able to execute automatic traveling including the automatic steering. The control device 21 has a function as a controller for automatic traveling. Note that the automatic traveling means that the control device 21 included in the tractor 1 controls a device related to traveling, and thus at least the steering of the tractor 1 is autonomously performed along a predetermined route. The automatic traveling may be configured to autonomously perform, in addition to the steering, at least one of vehicle speed control and work by the work machine.

The control device 21 is electrically connected to the steering motor 31 and controls the steering motor 31. The steering motor 31 is driven by being supplied with electric power determined by the control device 21. As described above, since a drive force of the steering motor 31 is transmitted via the gear mechanism 32 to the steering shaft 13, the steering wheel 12 can be controlled by controlling the steering motor 31. In other words, the direction of the front wheels 5 can be controlled by controlling the steering motor 31.

In the present embodiment, the control device 21 is electrically connected to a position acquisition unit 22 and an inertia measurement device 23. The position acquisition unit 22 and the inertia measurement device 23 are disposed at appropriate positions on the vehicle body 2.

The position acquisition unit 22 uses a positioning signal received, from a positioning satellite, by a positioning antenna 24 disposed on the vehicle body 2 to acquire a position of the tractor 1 as, for example, latitude and longitude information. That is, the tractor 1 is provided so as to be able to acquire position information of the vehicle itself. The position acquisition unit 22 outputs the position information of the tractor 1 to the control device 21.

For example, the position acquisition unit 22 may receive a positioning signal from a reference station (not illustrated) by an appropriate method and then perform positioning by using a known real time kinematic GNSS (RTK-GNSS) method. In addition, for example, the position acquisition unit 22 may perform positioning using a differential GNSS (DGNSS) method.

The inertia measurement device 23 includes a tri-axial angular velocity sensor and a tri-directional acceleration sensor. The inertia measurement device 23 outputs measured information to the control device 21. By providing the inertia measurement device 23, it is possible to measure inertia information such as a yaw angle, a pitch angle, and a roll angle of the vehicle body 2.

The control device 21 performs a start process and an end process of automatic traveling in response to an instruction from an operator (driver or the like) using an operation unit (not illustrated). In addition, the control device 21 obtains a position and an orientation of the vehicle body 2 of the tractor 1 based on information acquired from the position acquisition unit 22 and the inertia measurement device 23, for example. Further, for example, the control device 21 performs calculation related to the automatic steering in accordance with a relationship between the obtained position or the like of the vehicle body 2 and a predetermined route for automatic traveling, and controls the steering motor 31. Moreover, the control device 21 performs the following calculation (calculation for feedback control) in accordance with operation information of the steering motor 31.

Here, an outline of the automatic steering, which is performed by the tractor 1 according to the present embodiment, will be described. When performing the automatic steering, firstly, a reference line L is set. FIG. 3 is a view for explaining an example of a setting method of the reference line L. The setting method of the reference line L may be a method other than the method illustrated in FIG. 3.

When setting the reference line L, firstly, the tractor 1 is moved to an appropriate position in a field (point A in the drawing) and the point A is registered. The point A is registered according to an instruction to resister the point A by the driver. The position of the vehicle body 2 obtained by the position acquisition unit 22 at a time when the instruction to register the point A is issued is registered as the position of the point A.

When the point A is registered, the driver manually causes the tractor 1 to travel straight and move to a given position (point B in the drawing). When the tractor 1 reaches the given position, the point B is registered. The point B is registered according to an instruction to resister the point B by the driver. The position of the vehicle body 2 obtained by the position acquisition unit 22 at a time when the instruction to register the point B is issued is registered as the position of the point B. When the point A and the point B are registered, a straight line passing through the point A and the point B is set as the reference line L.

When the reference line L is set, lines parallel to the reference line L are generated as automatic traveling lines at a given interval. During the automatic steering, steering control in the traveling direction of the tractor 1 is performed such that the automatic traveling line and the position of the vehicle body 2 acquired by the position acquisition unit 22 coincide with each other. The steering control in the traveling direction of the tractor 1 is performed by controlling the steering motor 31.

### <2. Details of Relationship Between Steering Shaft and Steering Motor>

FIG. 4 is a side view illustrating a schematic configuration of a periphery of a steering shaft 13 included in the tractor 1 according to the present embodiment. As illustrated in FIG. 4, the gear mechanism 32 includes a gear case 321.

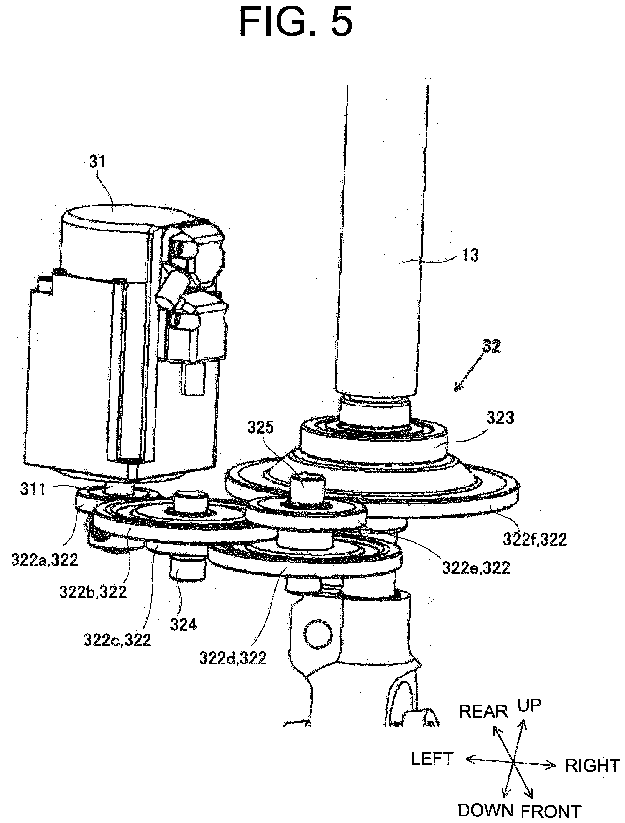

The gear case 321 is supported by a support member (not illustrated) in the steering column 14. The gear case 321 rotatably supports the steering shaft 13. In the present embodiment, the gear case 321 has an upper case 321a and a lower case 321b. The upper case 321a and the lower case 321b are overlapped each other, and are secured using fixtures such as a bolt and a nut. A plurality of gears 322 (see FIG. 5 described below) possessed by the gear mechanism 32 are disposed in an internal space formed by overlapping the upper case 321a and the lower case 321b.

The steering motor 31 is fixed to the upper case 321a, and most of the steering motor 31 is disposed outside of the upper case 321a. An output shaft 311 of the steering motor 31 (see FIG. 5 described below) protrudes into the gear case 321.

FIG. 5 is a perspective view illustrating a schematic configuration of the gear mechanism 32 in a state where the gear case 321 is removed. Note that FIG. 5 includes elements other than the gear mechanism 32. As illustrated in FIG. 5, a shaft bearing 323, which is fixed to the gear case 321, is disposed in the gear case 321. The steering shaft 13 is rotatably supported by the gear case 321 via the shaft bearing 323. As illustrated in FIG. 5, two rotation shafts 324 and 325, which are rotatably supported by a bearing (not illustrated) fixedly disposed in the gear case 321, are disposed in the gear case 321.

As illustrated in FIG. 5, the gear mechanism 32 includes the plurality of gears 322. The plurality of gears 322 includes a first gear 322a, a second gear 322b, a third gear 322c, a fourth gear 322d, a fifth gear 322e, and a sixth gear 322f.

The first gear 322a is attached to the output shaft 311 of the steering motor 31, and rotates together with the output shaft 311. The second gear 322b is attached to the first rotation shaft 324, and rotates together with the first rotation shaft 324. The second gear 322b meshes with the first gear 322a. That is, when the first gear 322a rotates, the second gear 322b also rotates. The third gear 322c is attached to the first rotation shaft 324 same as that of the second gear 322b, and rotates together with the first rotation shaft 324. That is, when the second gear 322b rotates, the third gear 322c also rotates.

The fourth gear 322d is attached to the second rotation shaft 325, and rotates together with the second rotation shaft 325. The fourth gear 322d meshes with the third gear 322c. That is, when the third gear 322c rotates, the fourth gear 322d also rotates. The fifth gear 322e is attached to the second rotation shaft 325 same as that of the fourth gear 322d, and rotates together with the second rotation shaft 325. That is, when the fourth gear 322d rotates, the fifth gear 322e also rotates. The sixth gear 322f is attached to the steering shaft 13, and rotates together with the steering shaft 13. The sixth gear 322f meshes with the fifth gear 322e. That is, when the fifth gear 322e rotates, the sixth gear 322f also rotates. As can be seen from the above, when the steering motor 31 is driven and the output shaft 311 rotates, the rotational force is transmitted to the steering shaft 13 via the plurality of gears 322, and the steering shaft 13 rotates.

In the present embodiment, the tractor 1 includes a switching mechanism that switches a power transmission state existing between the steering motor 31 and the steering shaft 13 between a connection state and a shutoff state. In the above description, the transmission of the rotational power of the steering motor 31 and the like are described on the assumption that the switching mechanism is in the connection state.

The switching mechanism is a so-called clutch. By providing the switching mechanism, the power transmission state existing between the steering motor 31 and the steering shaft 13 can be set into the connection state when the automatic steering is performed. In addition, when the manual steering is performed, the power transmission state existing between the steering motor 31 and the steering shaft 13 can be set into the shutoff state.

The power transmission state existing between the steering motor 31 and the steering shaft 13 is set into the shutoff state during the manual steering, thereby preventing the steering motor 31 from becoming a resistance during the manual steering. That is, it is possible to improve the operability of the tractor 1 provided to be capable of automatic steering. In addition, it is possible to reduce accumulation of fatigue of the driver, for example, when moving and traveling is performed by the manual steering.

### <3. Switching Mechanism>

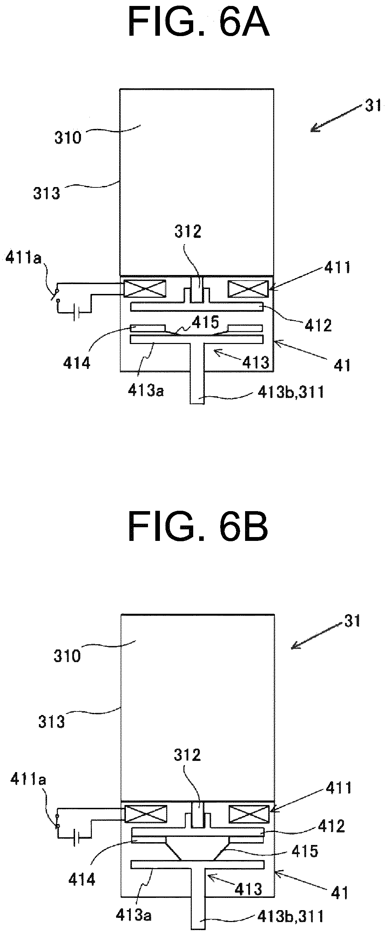

Next, a detailed example of the above-described switching mechanism will be described. FIGS. 6A and 6B are diagrams schematically illustrating a switching mechanism 41 included in the tractor 1 of the present embodiment. FIG. 6A is a diagram illustrating a case where the switching mechanism 41 is in the shutoff state. FIG. 6B is a diagram illustrating a case where the switching mechanism 41 is in the connection state. In the present embodiment, the switching mechanism 41 is included in the steering motor 31. In other words, the steering motor 31 of the present embodiment is a so-called motor with a clutch. The steering motor 31 is configured to include a motor main body portion 310 including a rotation shaft 312 which is rotated by supply of electric power to the motor 31, and the switching mechanism 41 which is disposed on one end portion side of the rotation shaft 312.

The switching mechanism 41 includes a stator 411, a rotor 412, an output shaft part 413, and an armature 414. The switching mechanism 41 is a so-called electromagnetic clutch.

The stator 411 includes a coil and is configured as an electromagnet. The stator 411 is disposed in a fixed state in a case 313 of the steering motor 31. The stator 411 is disposed to surround one end portion of the rotation shaft 312. The stator 411 functions as a magnet when a switch 411a is turned on to be in an energized state. The stator 411 does not function as a magnet when the switch 411a is turned off to be in a de-energized state.

The rotor 412 is a clutch plate having a flat shape. The rotor 412 is coupled to one end portion of the rotation shaft 312 and rotates together with the rotation shaft 312. The plate surface of the rotor 412 is orthogonal to the axis of the rotation shaft 312.

The output shaft part 413 has a flat plate portion 413a and a shaft portion 413b. The flat plate portion 413a and the shaft portion 413b each are a single member. The flat plate portion 413a is disposed to face the rotor 412 at an interval in the axial direction of the rotation shaft 312. The plate surface of the flat plate portion 413a is parallel to the plate surface of the rotor 412. The flat plate portion 413a is rotatably disposed in the case 313. The shaft portion 413b extends in the axial direction of the rotation shaft 312, sharing the same position of the axis with the axis of the rotation shaft 312. In the present example, the shaft portion 413b constitutes the output shaft 311 of the steering motor 31. That is, the above-described first gear 322a is attached to a distal end side of the shaft portion 413b.

The armature 414 is disposed on a side opposite to a surface of the flat plate portion 413a on which the shaft portion 413b is provided. The armature 414 is attached to a flat plate portion 413a via an elastic member 415 such as a plate spring. When the switch 411a is off, the armature 414 is located at a position away from the rotor 412 (see FIG. 6A). When the switch 411a is turned on, the armature 414 is attracted to the stator 411 functioning as a magnet, and is brought into close contact with the rotor 412 disposed between the stator 411 and the flat plate portion 413a (see FIG. 6B). That is, when the switch 411a is turned on, the output shaft part 413 can rotate together with the rotor 412. When the switch 411a is turned off, the armature 414 is not attracted to the stator 411 and thus is pulled toward the flat plate portion 413a side by the elastic force of the elastic member 415. As a result, the armature 414 is in a state of being away from the rotor 412 (see FIG. 6A).

As can be seen from the above, when the switch 411a is off, the switching mechanism 41 sets the power transmission state existing between the steering motor 31 and the steering shaft 13 to the shutoff state. When the switch 411a is on, the switching mechanism 41 sets the power transmission state existing between the steering motor 31 and the steering shaft 13 to the connection state. When the automatic steering is performed, the switch 411a is turned on, so that the rotational power of the steering motor 31 can be transmitted to the steering shaft 13 to appropriately perform the automatic steering. When the manual steering is performed, the switch 411a is turned off, so that the steering wheel 12 can be easily operated without receiving resistance of the steering motor 31.

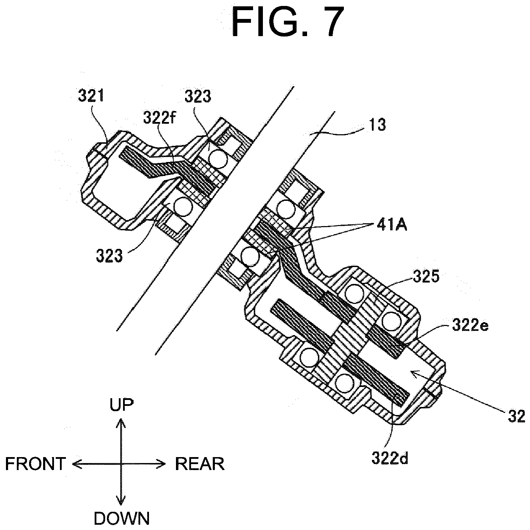

FIG. 7 is a diagram for explaining a modification example of a switching mechanism 41A. The switching mechanism 41A of the modified example is a mechanical clutch. The switching mechanism 41A can switch the power transmission state existing between the steering motor 31 and the steering shaft 13 between the connection state and the shutoff state by operating a switching operation member (not illustrated). The switching operation member may be, for example, a clutch lever, a clutch pedal, or the like. The switching operation member may be configured to be operated manually by the driver, for example. However, the switching operation member may be provided so as to be automatically operated by a machine. In this modified example, the steering motor 31 is not provided with the above-described switching mechanism 41, and the steering motor 31 is merely a motor.

In detail, the switching mechanism 41A switches the connection relationship existing between the gear mechanism 32 and the steering shaft 13. More specifically, the switching mechanism 41A switches the connection relationship existing between the gear mechanism 32 and the steering shaft 13 between connection and disconnection. When the gear mechanism 32 and the steering shaft 13 are set into a disconnection state, the power transmission state existing between the steering motor 31 and the steering shaft 13 is set into the shutoff state. When the gear mechanism 32 and the steering shaft 13 are set into the connection state, the power transmission state existing between the steering motor 31 and the steering shaft 13 is set into the connection state.

With such a configuration, when the steering wheel 12 is operated with the switching mechanism 41A in the shutoff state, the steering wheel 12 can be prevented from receiving not only the resistance of the steering motor 31 but also the resistance of the gear mechanism 32. For this reason, the operability of the steering wheel 12 during the manual steering can be improved. The gear case 321, which houses the plurality of gears 322 constituting the gear mechanism 32, is usually filled with grease (not illustrated) for the purpose of lubricating the gears 322. Due to the influence of the filled grease, resistance is likely to be generated when the gear mechanism 32 is moved. However, in this modified example, the manual steering can be performed without being influenced by the resistance generated by the filling of the grease.

In this modified example, the sixth gear 322f constituting the gear mechanism 32 is not integrated with the steering shaft 13. The sixth gear 322f is provided rotatably with respect to the steering shaft 13. The switching mechanism 41A includes two friction plates (not illustrated) disposed so as to sandwich the steering shaft 13. Each of the friction plates is fixed to the steering shaft 13 by using, for example, spline machining or the like, and rotates together with the steering shaft 13.

When the switching mechanism 41A is in the shutoff state, each of the friction plates is separated from the sixth gear 322f, and the sixth gear 322f does not rotate even if the steering shaft 13 rotates. That is, when the steering wheel 12 is rotated, the steering wheel 12 can be easily operated without receiving the resistance from the gear mechanism 32 and the steering motor 31.

When the switching operation member is operated to change the switching mechanism 41A from the shutoff state to the connection state, each of the friction plates is pushed against the sixth gear 322f. Therefore, when the steering shaft 13 is rotated, the sixth gear 322f is rotated following each of the friction plates. In other words, in the connection state, when the steering motor 31 is driven, the rotational power is transmitted to the steering shaft 13 via the gear mechanism 32.

In this modified example, the switching mechanism 41A constituted by a mechanical clutch is configured to be provided between the steering shaft 13 and the gear mechanism 32. However, this is merely an example. The switching mechanism constituted by a mechanical clutch may be provided, for example, between the output shaft 311 of the steering motor 31 and the gear mechanism 32. In addition, the switching mechanism constituted by a mechanical clutch may be provided in the gear mechanism 32. In addition, the switching mechanism provided between the steering shaft 13 and the gear mechanism 32 is not limited to be constituted by a mechanical clutch, but may also be constituted by, for example, an electromagnetic clutch.

### <4. Example of Control Operation Related to Switching Mechanism>

Next, an example of a control operation related to the switching mechanism 41, 41A in the tractor 1 will be described. The control operation can be executed by the control device 21 described above.

### [4-1. Control Operation Example Related to Automatic Traveling]

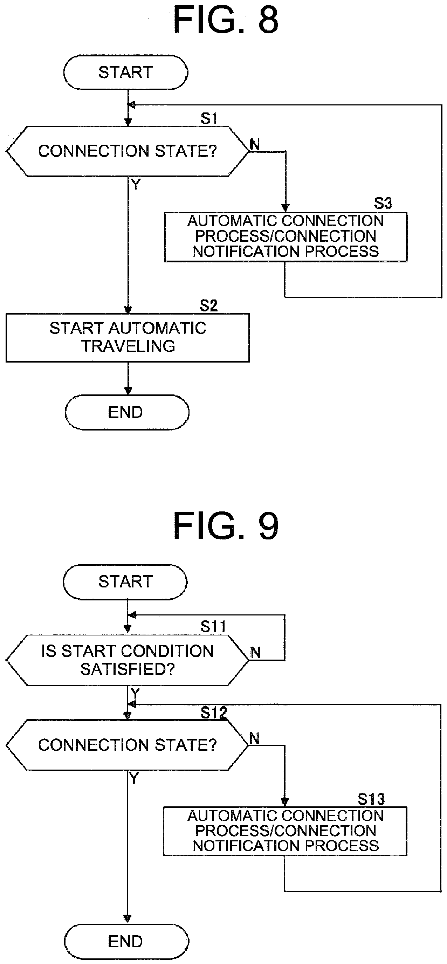

FIG. 8 is a flowchart illustrating an example of a control operation related to the switching mechanism 41, 41A when an operation to start the automatic traveling is performed. The operation to start the automatic traveling is performed by using, for example, an operation unit provided in the tractor 1 or provided in a portable communication terminal (not illustrated) provided to be able to communicate with the tractor 1.

In step S1, the control device 21 determines whether or not the switching mechanism 41, 41A is in the connection state. For example, when the switching mechanism is the switching mechanism 41 constituted by an electromagnetic clutch, the control device 21 can determine whether or not the switching mechanism 41 is in the connection state by confirming an on/off state of the switch 411a (see FIG. 6A and the like). Further, for example, when the switching mechanism is the switching mechanism 41A constituted by a mechanical clutch, the control device 21 can determine whether or not the switching mechanism 41A is in the connection state based on information from a sensor that detects the state of a switching operation member such as a clutch lever. When it is determined that the switching mechanism 41, 41A is in the connection state (Yes in Step S 1), the process proceeds to Step S2. When it is determined that the switching mechanism 41, 41A is in the shutoff state (No in step S1), the process proceeds to step S3.

In step S2, since the control device 21 can determine that the switching mechanism 41, 41A is in a state in which the automatic steering can be performed, the control device 21 performs a process of starting the automatic traveling. That is, in this example, in a case where the switching mechanism 41, 41A is in the connection state when the operation to start the automatic traveling is performed, the automatic traveling is started. Since the automatic traveling is started after confirming that the switching mechanism 41, 41A is in an appropriate state, the automatic traveling can be safely started.

In step S3, for example, when the switching mechanism is the switching mechanism 41 constituted by an electromagnetic clutch, the control device 21 performs a process of automatically setting the switching mechanism 41 into the connection state. Specifically, the control device 21 performs a control process of turning on the switch 411a. Thus, the switching mechanism 41 is switched from the shutoff state into the connection state. In addition, for example, when the switching mechanism is the switching mechanism 41A constituted by a mechanical clutch, the control device 21 performs a process of notifying the driver or the like to switch the switching mechanism 41A into the connection state. As a result, a notification device provided in the tractor 1 or provided in a portable communication terminal (not illustrated) provided to be able to communicate with the tractor 1, or the like makes a notification to prompt to set the switching mechanism 41A into the connection state. A notification method using the notification device may be, for example, screen display, voice guidance, or the like. When the process of step S3 is completed, the process is returned to step S1, and the process of step S1 and subsequent steps are performed.

Even in a case where the switching mechanism is the mechanical switching mechanism 41A, the switching mechanism 41A may be configured to be automatically set into the connection state when a switching operation member such as a clutch lever can be automatically operated.

As can be seen from the above, in the present example, when the operation to start the automatic traveling is performed, it is confirmed whether the switching mechanism 41, 41A is in the connection state or the shutoff state. With such a configuration, the automatic traveling can be started after it is confirmed that the switching mechanism 41, 41A is in the connection state. In other words, the automatic traveling can be safely started.

In addition, in the present example, in a case where the switching mechanism 41, 41A is in the shutoff state when the operation to start the automatic traveling is performed, the switching mechanism 41 is automatically set into the connection state, or a notification to prompt to set the switching mechanism 41A to the connection state is made. In the present example, the possibility that the automatic traveling is started with the switching mechanism 41, 41A in the shutoff state can be reduced. In other words, the automatic traveling can be safely started.

FIG. 9 is a flowchart illustrating an example of a control operation related to the switching mechanism 41, 41A before starting the automatic traveling. In this example, it is assumed that a condition (start condition) for permitting the start of the automatic traveling is set in advance. For example, when the start condition is satisfied, the driver or the like is notified of the satisfaction of the start condition, and the automatic traveling is started when the driver or the like performs the operation to start the automatic traveling. In addition, as another example, when the start condition is satisfied, the automatic traveling is automatically started.

In step S11, the control device 21 monitors whether or not the start condition of the automatic traveling is satisfied. The start condition of the automatic traveling is satisfied, for example, when the vehicle itself reaches within a predetermined distance with respect to a start position of the automatic traveling set in advance. In addition, for example, the start condition of the automatic traveling is satisfied when an angle of the vehicle itself with respect to a start route of the automatic traveling set in advance is within a predetermined angle. The start condition of the automatic traveling may be singular or plural. When it is determined that the start condition is satisfied (Yes in step S11), the process proceeds to the next step S12. When it is determined that the start condition is not satisfied (No in step S11), the process of step S11 is performed again. In other words, the process of step S11 is repeated until the start condition is satisfied.

The start condition may include a condition that the temperature of the grease filled in the gear case 321 is equal to or higher than a predetermined temperature. The predetermined temperature may be, for example, the lower limit temperature of the temperature range in which the viscosity of the grease is assumed not to adversely affect the operability of the steering wheel 12, and may be appropriately determined by an experiment or the like.

In step S12, the control device 21 determines whether or not the switching mechanism 41, 41A is in the connection state. The determination process is the same as step S1 in FIG. 8 described above. When it is determined that the switching mechanism 41, 41A is in the connection state (Yes in step S12), the process is terminated because the switching mechanism 41, 41A is in a state suitable for automatic steering. On the other hand, when it is determined that the switching mechanism 41, 41A is in the shutoff state (No in step S12), the process proceeds to step S13.

In step S13, for example, when the switching mechanism is the switching mechanism 41 constituted by an electromagnetic clutch, the control device 21 performs a process of automatically setting the switching mechanism 41 into the connection state. In addition, for example, when the switching mechanism is the switching mechanism 41A constituted by a mechanical clutch, the control device 21 performs a process of notifying the driver or the like to switch the switching mechanism 41A into the connection state. These processes are the same as step S3 in FIG. 8 described above. When the process of step S13 is completed, the process is returned to step S12, and the process of step S12 and subsequent steps are performed.

As can be seen from the above, in this example, in a case where the switching mechanism 41, 41A is in the shutoff state when it is determined that the start condition of the automatic traveling is satisfied, the switching mechanism 41, 41A is automatically set into the connection state, or a notification to prompt to set the switching mechanism 41, 41A into the connection state is made. With such a configuration, the switching mechanism 41, 41A can be maintained in the shutoff state until immediately before the automatic traveling is started. When the start condition of the automatic traveling is satisfied, the switching mechanism 41, 41A can be quickly switched into the connection state suitable for the automatic traveling.

The notification to prompt to set the switching mechanism 41, 41A into the connection state may simply include a configuration for notifying that the start condition of the automatic traveling is satisfied.

In addition, the tractor 1 may be configured to include an operation unit (a switch or the like) that causes to shift to a standby state (standby mode) in which the tractor 1 waits for the start of the automatic traveling. The standby state may be a preparatory period for the switching from manual to automatic. In the standby state, for example, the above-described points A and B (see FIG. 3) may be provided to be registered. In addition, in the standby state, other settings related to the automatic traveling may be provided. In such a configuration in which the shift to the standby state can be performed, when the shift to the standby state is performed, in a case where the switching mechanism 41, 41A is in the shutoff state, the switching mechanism 41, 41A may be automatically set into the connection state, or a notification to prompt to set the switching mechanism 41, 41A into the connection state may be made. Since the registration of the point A or the like is performed by the manual steering, when the registration of the point A or the like is performed in the standby state, a process of automatically setting the switching mechanism 41, 41A into the connection state may be performed at an appropriate timing after the completion of the manual steering related to the registration.

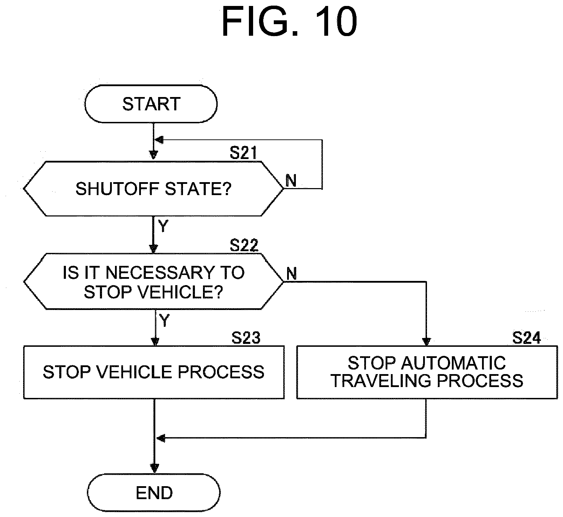

FIG. 10 is a flowchart illustrating an example of a control operation related to the switching mechanism 41, 41A during the automatic traveling. At the time of starting the process of FIG. 10, the tractor 1 is automatically traveling. In addition, at the time of starting the process of FIG. 10, the switching mechanism 41, 41A is in the connection state. In addition, in FIG. 10, it is assumed that the switching mechanism 41, 41A is switched from the connection state into the shutoff state for some reason during the automatic traveling.

In step S21, the control device 21 monitors whether or not the switching mechanism 41, 41A enters the shutoff state. For example, in a case where the switching mechanism is the switching mechanism 41 constituted by an electromagnetic clutch, and when a switch 411a (see FIG. 6A and the like) is turned off, it is determined that the switching mechanism 41 enters the shutoff state. In addition, for example, when the switching mechanism is the switching mechanism 41A constituted by a mechanical clutch, it is determined whether or not the switching mechanism 41A is in the shutoff state based on information from a sensor that detects the state of a switching operation member such as a clutch lever. When it is determined that the switching mechanism 41, 41A enters the shutoff state (Yes in step S21), the process proceeds to the next step S22. When it is determined to be in the connection state (No in step S21), the process of step S21 is performed again. In other words, the process of step S21 is repeated until the shutoff state is detected.

The switching of the switching mechanism 41, 41A from the connection state into the shutoff state during the automatic traveling may be performed, for example, when the driver or the like operates an operation unit of the switching mechanism 41, 41A. The operation by the driver or the like may be an intentional operation or an unintentional operation. In addition, for example, the switching of the switching mechanism 41, 41A from the connection state into the shutoff state during the automatic traveling may be performed when an abnormality occurs in the steering motor 31. In addition, for example, the switching of the switching mechanism 41, 41A from the connection state into the shutoff state during the automatic traveling may be performed when the driver operates the steering wheel 12. Whether or not the driver has operated the steering wheel 12 can be determined, for example, by monitoring a value (for example, current value) of load of the steering motor 31. In addition, whether or not the driver has operated the steering wheel 12 can be determined by monitoring information from a steering angle sensor that measures a steering angle of the steering wheel.

In step S22, the control device 21 determines whether it is necessary to stop the vehicle itself. For example, in a case where the switching of the switching mechanism 41, 41A into the shutoff state occurs may have occurred unintentionally, the control device 21 determines that it is necessary to stop the vehicle in consideration of safety. As an example of such a case, there is a case where an abnormality occurs in the steering motor 31 and the switching mechanism 41, 41A is set into the shutoff state. In addition, for example, in a case where it is determined that the switching of the switching mechanism 41, 41A into the shutoff state occurs due to an intentional action of the driver, the control device 21 may determine not to stop the vehicle. An example of a case where it is determined not to stop the vehicle is a case where the driver operates the steering wheel 12 and the switching mechanism 41, 41A enters the shutoff state. When it is determined that it is necessary to stop the vehicle (Yes in step S22), the process proceeds to step S23. When it is determined that it is not necessary to stop the vehicle (No in step S22), the process proceeds to step S24.

In step S23, the control device 21 performs a process of stopping the vehicle itself. When the process of stopping the work vehicle is performed, it is preferable that the driver or the like is notified of the process.

In step S24, the control device 21 performs a process of stopping the automatic traveling. However, the control device 21 does not perform the process of stopping the work vehicle. When the process of stopping the automatic traveling is performed, it is preferable that the driver or the like is notified of the process.

As can be seen from the above, in this example, when the switching mechanism 41, 41A enters the shutoff state during the traveling by the automatic traveling, the automatic traveling is stopped or the process of stopping the work vehicle is performed. Such a configuration can prevent the automatic traveling from being continued in a state unsuitable for the automatic traveling.

Note that, as a mode different from the above example, a configuration may be adopted in which the vehicle is stopped in all cases where the switching mechanism 41, 41A enters the shutoff state during the automatic traveling. In other words, in the flow illustrated in FIG. 10, the determination process of step S22 may be deleted.

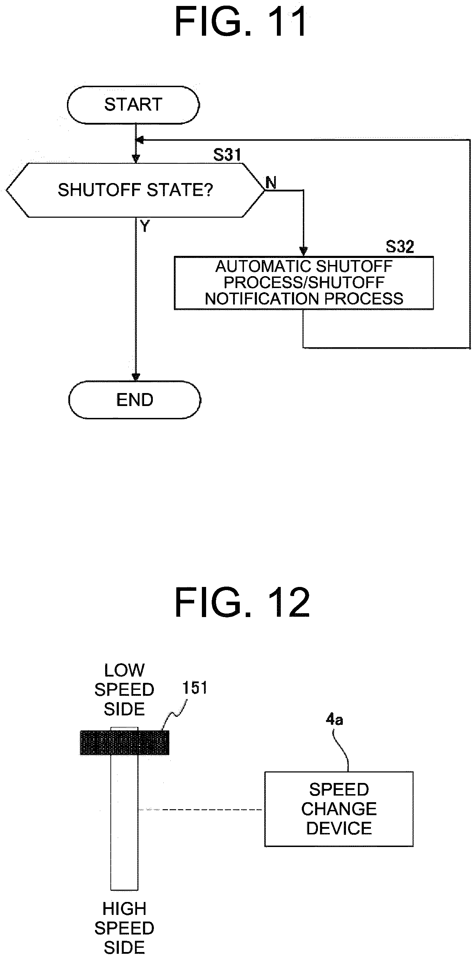

FIG. 11 is a flowchart illustrating an example of a control operation related to the switching mechanism 41, 41A when the automatic traveling is stopped. The stop of the automatic traveling is executed, for example, in response to an instruction from the driver or the like. In addition, for example, the stop of the automatic traveling is automatically executed by the determination of the control device 21.

As cases where the automatic traveling is stopped, for example, the following cases are exemplified. In the field, only the planned straight routes may be automatically traveled, and the turning routes connecting the straight routes may be manually traveled by the driver riding on the tractor 1. With such a configuration, when the automatic traveling on the straight route is completed, the automatic traveling is temporarily stopped. In addition, for example, during the automatic traveling, the tractor 1 may deviate from the automatic traveling route set in advance due to a presence of a slope, slipping, or the like. In such cases, the automatic traveling is stopped.

In step S31, the control device 21 determines whether the switching mechanism 41, 41A is in the shutoff state. The determination process is the same as step S21 in FIG. 10 described above. When it is determined that the switching mechanism 41, 41A is in the shutoff state (Yes in step S31), the process is terminated because the switching mechanism 41, 41A is in a state suitable for the manual steering. On the other hand, when it is determined that the switching mechanism 41, 41A is in the connection state (No in step S31), the process proceeds to step S32.

In step S32, for example, when the switching mechanism is the switching mechanism 41 constituted by an electromagnetic clutch, the control device 21 performs a process of automatically setting the switching mechanism 41 into the shutoff state. To be specific, the control device 21 performs a control process of turning off the switch 411a. Thus, the switching mechanism 41 is switched from the connection state into the shutoff state. In addition, for example, when the switching mechanism is the switching mechanism 41A constituted by a mechanical clutch, the control device 21 performs a process for notifying the driver or the like to switch the switching mechanism 41A into the shutoff state. As a result, a notification device provided in the tractor 1 or provided in a portable communication terminal (not illustrated) provided to be able to communicate with the tractor 1, or the like makes a notification to prompt to set the switching mechanism 41A into the shutoff state. A notification method using the notification device may be, for example, screen display, voice guidance, or the like. When the process of step S32 is completed, the process is returned to step S31, and the process of step S31 and subsequent steps are performed.

As can be seen from the above, in this example, in a case where the switching mechanism 41, 41A is in the connection state when the automatic traveling is stopped, the switching mechanism 41 is automatically set into the shutoff state, or a notification to prompt to set the switching mechanism 41A into the shutoff state is made. With such a configuration, it is possible to make it difficult to forget to set the switching mechanism 41, 41A into the shutoff state after the automatic traveling is stopped. For example, since it is difficult to forget to set the switching mechanism 41, 41A into the shutoff state, it is possible to easily drive on the turning route traveling after the straight route by the manual steering.

### [4-2. Other Control Operation Examples]

FIG. 12 is a schematic diagram for explaining the speed change stage included in the tractor 1 of the present embodiment. As illustrated in FIG. 12, the tractor 1 includes a sub speed change lever 151. The sub speed change lever 151 is an operation tool for instructing, for example, any one of two stages (low speed side and high speed side). The driver or the like designates a rough speed using the sub speed change lever 151, and then designates a fine speed using the main speed change lever (not illustrated). The sub speed change may be switchable in three or more stages. In this case, it is preferable that the three or more sub speed change stages are classified into any one of a low speed stage (low speed side) for field work and a high speed stage (high speed side) for traveling on a road (outside a field). For example, in the case of three stages, there may be a first low speed stage, a first high speed stage, and a second high speed stage, and so on.

In other words, the tractor 1 includes a speed change device 4a having a low speed stage used during work in the field and a high speed stage used at a time other than during the work. Information on the speed change stage of the speed change device 4a is input to the control device 21. The information on the speed change stage may be, for example, information on a sensor that detects a lever position of the sub speed change lever 151.

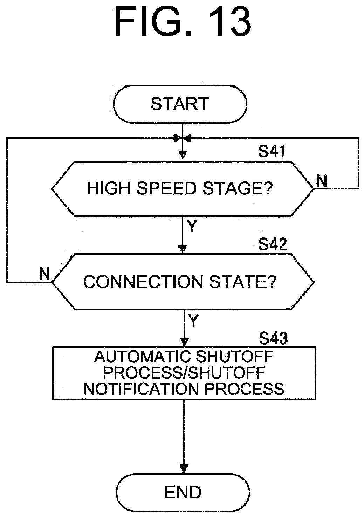

FIG. 13 is a flowchart illustrating an example of a control operation related to the switching mechanism 41, 41A based on the information of the speed change stage.

In step S41, the control device 21 monitors whether or not the speed change stage of the sub speed change is a high speed stage. When the speed change stage is the high speed stage (Yes in step S41), the process proceeds to the next step S42. When the speed change stage is the low speed stage (No in step S41), the process of step S41 is performed again. In other words, the process of step S41 is repeated until it is detected that the speed change stage is the high speed change stage.

In step S42, the control device 21 determines whether or not the switching mechanism 41, 41A is in the connection state. The determination process is the same as step S1 in FIG. 8 described above. When it is determined that the switching mechanism 41, 41A is in the connection state (Yes in step S42), the process proceeds to the next step S43. On the other hand, when it is determined that the switching mechanism 41, 41A is in the shutoff state (No in step S42), the process is returned to step S41.

In step S43, for example, when the switching mechanism is the switching mechanism 41 constituted by an electromagnetic clutch, the control device 21 performs a process of automatically setting the switching mechanism 41 into the shutoff state. In addition, for example, when the switching mechanism is the switching mechanism 41A constituted by a mechanical clutch, the control device 21 performs a process for notifying the driver or the like to switch the switching mechanism 41A into the shutoff state. These processes are the same as those in step S32 in FIG. 11 described above.

As can be seen from the above, in this example, when the speed change device 4a is at the high speed stage and the switching mechanism 41, 41A is in the connection state, the switching mechanism 41 is automatically set the shutoff state, or a notification to prompt to set the switching mechanism 41A into the shutoff state is made. According to this, it is possible to suppress forgetting to set the switching mechanism 41, 41A from the connection state into the shutoff state when the speed change stage becomes the high speed stage. For example, when traveling on a road, it is possible to easily drive on the road by reliably setting the switching mechanism 41, 41A into the shutoff state.

When an abnormality of the steering motor 31 is detected or when the load of the steering motor 31 becomes equal to or greater than a predetermined value during the automatic traveling, the control device 21 may automatically set the switching mechanism 41 into the shutoff state or may perform a notification process to prompt to set the switching mechanism 41A into the shutoff state, as in this example.

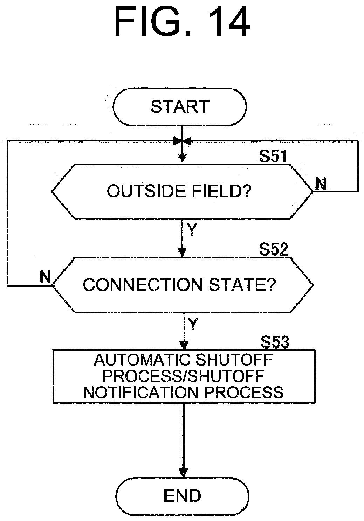

FIG. 14 is a flowchart illustrating an example of a control operation related to the switching mechanism 41, 41A based on the position information of the vehicle itself. In this example, it is assumed that field information including the location of the field is registered in advance in a storage unit (not illustrated) included in the tractor 1. The position information of the vehicle itself is input from the position acquisition unit 22 (see FIG. 2) to the control device 21.

In step S51, the control device 21 monitors whether or not the vehicle itself is located outside the field. When the vehicle itself is located outside the field (Yes in step S51), the process proceeds to the next step S52. When the vehicle itself is located in the field (No in step S51), the process of step S51 is performed again. In other words, the process of step S51 is repeated until it is detected that the vehicle itself is located outside the field.

In step S52, the control device 21 determines whether or not the switching mechanism 41, 41A is in the connection state. The determination process is the same as step S1 in FIG. 8 described above. When it is determined that the switching mechanism 41, 41A is in the connection state (Yes in step S52), the process proceeds to the next step S53. On the other hand, when it is determined that the switching mechanism 41, 41A is in the shutoff state (No in step S52), the process is returned to step S51.

In step S53, for example, when the switching mechanism is the switching mechanism 41 constituted by an electromagnetic clutch, the control device 21 performs a process of automatically setting the switching mechanism 41 into the shutoff state. In addition, for example, when the switching mechanism is the switching mechanism 41A constituted by a mechanical clutch, the control device 21 performs a process for notifying the driver or the like to switch the switching mechanism 41A into the shutoff state. These processes are the same as those in step S32 in FIG. 11 described above.

As can be seen from the above, in this example, in a case where the switching mechanism 41, 41A is in the connection state when it is determined that the vehicle itself is located outside the field, the switching mechanism 41 is automatically set into the shutoff state, or a notification to prompt to set the switching mechanism 41A into the shutoff state is made. According to this, it is possible to suppress forgetting to set the switching mechanism 41, 41A from the connection state into the shutoff state when the vehicle itself is located outside the field. Therefore, the driver can easily perform traveling outside the field where manual traveling is usually performed.

As another embodiment, when it is determined that the position of the vehicle itself is located in the field, the switching mechanism 41 may be automatically set into the connection state, or a notification to prompt to set the switching mechanism 41A into the connection state may be made.

### <5. Notes, etc.>

The various technical features disclosed in the present specification can be modified in various ways without departing from the gist of the technical creation thereof. In addition, the multiple embodiments and modified examples shown in the present specification may be combined to the extent possible.

### <6. Appendices>

An exemplary work vehicle according to the present invention may have a configuration (first configuration) in which the work vehicle comprises a steering wheel, a steering shaft that supports the steering wheel, a steering motor that enables automatic steering of the steering wheel, and a switching mechanism that switches a power transmission state existing between the steering motor and the steering shaft between a connection state and a shutoff state.

The work vehicle according to the first configuration may have a configuration (second configuration) in which the work vehicle comprises a gear mechanism provided so as to be able to transmit rotational power of the steering motor to the steering shaft, wherein the switching mechanism switches a connection relationship between the gear mechanism and the steering shaft.

The work vehicle according to the first or second configuration may have a configuration (third configuration) in which the work vehicle is provided so as to be able to execute automatic traveling including the automatic steering, and in a case where the switching mechanism is in the connection state when an operation to start the automatic traveling is performed, the automatic traveling is started.

The work vehicle according to any one of the first to third configurations have a configuration (fourth configuration) in which the work vehicle is provided so as to be able to execute automatic traveling including the automatic steering, and in a case where the switching mechanism is in the shutoff state when an operation to start the automatic traveling is performed, the switching mechanism is automatically set into the connection state, or a notification to prompt to set the switching mechanism into the connection state is made.

The work vehicle according to any one of the first to fourth configurations may have a configuration (fifth configuration) in which the work vehicle is provided so as to be able to execute automatic traveling including the automatic steering, and in a case where the switching mechanism is in the connection state when the automatic traveling is stopped, the switching mechanism is automatically set into the shutoff state, or a notification to prompt to set the switching mechanism into the shutoff state is made.

The work vehicle according to any one of the first to fifth configurations may have a configuration (sixth configuration) in which the work vehicle is provided so as to be able to execute automatic traveling including the automatic steering, and when the switching mechanism enters the shutoff state during traveling by the automatic traveling, the automatic traveling is stopped or a process of stopping the work vehicle is performed.

The work vehicle according to any one of the first to sixth configurations may have a configuration (seventh configuration) in which the work vehicle comprises a speed change device having a low speed stage used during work in a field and a high speed stage used at a time other than during the work, wherein when the speed change device is at the high speed stage and the switching mechanism is in the connection state, the switching mechanism is automatically set into the shutoff state, or a notification to prompt to set the switching mechanism into the shutoff state is made.

The work vehicle according to any one of the first to seventh configurations may have a configuration (eighth configuration) in which the work vehicle is provided so as to be able to acquire position information of the work vehicle itself, and in a case where the switching mechanism is in the connection state when it is determined that the work vehicle itself is located outside the field, the switching mechanism is automatically set into the shutoff state, or a notification to prompt to set the switching mechanism into the shutoff state is made.

The work vehicle according to any one of the first to eighth configurations may have a configuration (ninth configuration) in which the work vehicle is provided so as to be able to execute automatic traveling including the automatic steering, and in a case where the switching mechanism is in the shutoff state when it is determined that a start condition of the automatic traveling is satisfied, the switching mechanism is automatically set into the connection state, or a notification to prompt to set the switching mechanism into the connection state is made.

### REFERENCE SIGNS LIST

1: Tractor (Work Vehicle)
4a: Speed Change Device
12: Steering Wheel
13: Steering Shaft
31: Steering Motor
32: Gear Mechanism
41, 41A: Switching Mechanism

## Claims

1. A work vehicle comprising:
a steering wheel;
a steering shaft that supports the steering wheel;
a steering motor that enables automatic steering of the steering wheel; and
a switching mechanism that switches a power transmission state existing between the steering motor and the steering shaft between a connection state and a shutoff state.

2. The work vehicle according to claim 1, comprising:
a gear mechanism provided so as to be able to transmit rotational power of the steering motor to the steering shaft,
wherein the switching mechanism switches a connection relationship between the gear mechanism and the steering shaft.

3. The work vehicle according to claim 1 or 2, wherein
the work vehicle is provided so as to be able to execute automatic traveling including the automatic steering, and
in a case where the switching mechanism is in the connection state when an operation to start the automatic traveling is performed, the automatic traveling is started.

4. The work vehicle according to claim 1 or 2, wherein
the work vehicle is provided so as to be able to execute automatic traveling including the automatic steering, and
in a case where the switching mechanism is in the shutoff state when an operation to start the automatic traveling is performed, the switching mechanism is automatically set into the connection state, or a notification to prompt to set the switching mechanism into the connection state is made.

5. The work vehicle according to claim 1 or 2, wherein
the work vehicle is provided so as to be able to execute automatic traveling including the automatic steering, and
in a case where the switching mechanism is in the connection state when the automatic traveling is stopped, the switching mechanism is automatically set into the shutoff state, or a notification to prompt to set the switching mechanism into the shutoff state is made.

6. The work vehicle according to claim 1 or 2, wherein
the work vehicle is provided so as to be able to execute automatic traveling including the automatic steering, and
when the switching mechanism enters the shutoff state during traveling by the automatic traveling, the automatic traveling is stopped or a process of stopping the work vehicle is performed.

7. The work vehicle according to claim 1 or 2, comprising:
a speed change device having a low speed stage used during work in a field and a high speed stage used at a time other than during the work,
wherein when the speed change device is at the high speed stage and the switching mechanism is in the connection state, the switching mechanism is automatically set into the shutoff state, or a notification to prompt to set the switching mechanism into the shutoff state is made.

8. The work vehicle according to claim 1 or 2, wherein
the work vehicle is provided so as to be able to acquire position information of the work vehicle itself, and
in a case where the switching mechanism is in the connection state when it is determined that the work vehicle itself is located outside the field, the switching mechanism is automatically set into the shutoff state, or a notification to prompt to set the switching mechanism into the shutoff state is made.

9. The work vehicle according to claim 1 or 2, wherein
the work vehicle is provided so as to be able to execute automatic traveling including the automatic steering, and
in a case where the switching mechanism is in the shutoff state when it is determined that a start condition of the automatic traveling is satisfied, the switching mechanism is automatically set into the connection state, or a notification to prompt to set the switching mechanism into the connection state is made.
